# EUROPEAN PATENT APPLICATION

(11) **EP 1 507 236 A1**
(43) Date of publication of application: **16.02.2005**
(21) Application number: 04077302.0
(22) Date of filing: 13.08.2004
(51) Int. Cl.: G06T 7/00

(54) **System and method for processing inspection data for evaluating degradation of coatings on components**

(30) Priority: 15.08.2003 US 495502 P; 04.08.2004 US 910867
(71) Applicant: Siemens Westinghouse Power Corporation, Orlando, FL 32826-2399 (US)
(72) Inventor: Huang, Kai, 45040 Mason, OH (US); Subramanian, Ramesh, 32765 Oviedo, FL (US)
(74) Representative: Morgan, Marc

(57) **Abstract**

System and method are provided for processing inspection data for evaluating degradation of a coating, as may be used as a thermal barrier in a gas turbine component. The system may include a database (12) with a representation of a component divided into zones (16, 18) corresponding to a performance criteria associated with the operation of the component. The system may further include a processor (20) configured to process inspection data for the coating relative to the zones, such as calculating an area percentage of coating degradation for each zone. A rule base may be used to correlate the processed inspection data with appropriate repair options.

## Description

This application claims priority to a provisional application filed on August 15, 2003, having application number 60/495,502, which is incorporated herein by reference.

### FIELD OF THE INVENTION

The invention relates to system and method for processing inspection data for evaluating degradation of coatings on a component.

### BACKGROUND OF THE INVENTION

It is known to use various superalloy materials, such as cobalt or nickel-based superalloys, for making blades, vanes and other components for power generating turbines, propulsion equipment, etc. These turbines can operate at temperatures in the range of 1000 Deg. C to 1600 Deg. C and are generally protected by a series of protective coatings. The coatings may comprise layers of metallic base coats, service-formed aluminum oxide layers and a final ceramic thermal barrier coating ("TBC"). Long-term exposure of these ceramic coatings to the hostile, high temperature, abrasive environment in which such turbines typically operate can cause phase destabilization, sintering, microcracking, delamination and ultimately spallation within the coating layers, exposing the superalloy component and possibly resulting in rapid degradation or failure and potentially requiring costly and burdensome repairs.

### BRIEF SUMMARY OF THE INVENTION

Inspection techniques and system configured to provide a more accurate and thorough understanding of coating degradation in a component or test specimen are provided. The inspection techniques may comprise obtaining inspection data over one or more selectable zones of the component and the resulting inspection data may be cumulatively archived for a plurality of components belonging to a common classification, such as may be based on component types or component model numbers. This information could allow verifying whether the actual coating performance of a given type of component matches its predicted performance, or this could allow using actual operational data of the component to redefine or ''fine tune" the model used for the design of the component.

Regardless of the specific application, it would be desirable to have standardized computerized techniques and/or tools for systematically collecting and processing inspection data of components so that zones of the component that may be subject to different operational and/or environmental parameters (or different levels of such parameters) may be systematically inspected for coating degradation. This could allow a designer to quantitatively assess the influence such operational and/or environmental parameters may have on the coating degradation. This information may allow a designer of the components to analyze possible root causes of any such degradation.

Generally, the present invention fulfills the foregoing needs by providing in one aspect thereof, a system for processing inspection data for evaluating a coating on a component. The system may comprise a database with a representation of a component. The system may further comprise a processor configured to process the inspection data of the component relative to the representation of the component.

The present invention further fulfills the foregoing needs by providing in another aspect thereof, a method for processing inspection data for evaluating degradation of a coating on a component. The method allows populating a database with a representation of a component. The method further allows mapping the representation of the component based on a selected criteria. Inspection data of the component may be processed relative to the representation for that component to determine degradation of the coating, thereby enabling a user to make a servicing decision in connection with the component undergoing inspection.

### BRIEF DESCRIPTION OF THE DRAWINGS

These and other advantages of the invention will be more apparent from the following description in view of the drawings that show:
FIG. 1 is a block diagram representation of an exemplary system embodying aspects of the present invention.
FIG. 2 illustrates a process flow of an exemplary method embodying aspects of the present invention.
FIG. 3 is an exemplary plot indicative of coating loss for a plurality of inspection zones defined for a given test specimen.
FIG. 4 is another exemplary plot indicative of coating loss for a plurality of zones having a distinct temperature profile relative to one another.

### DETAILED DESCRIPTION OF THE INVENTION

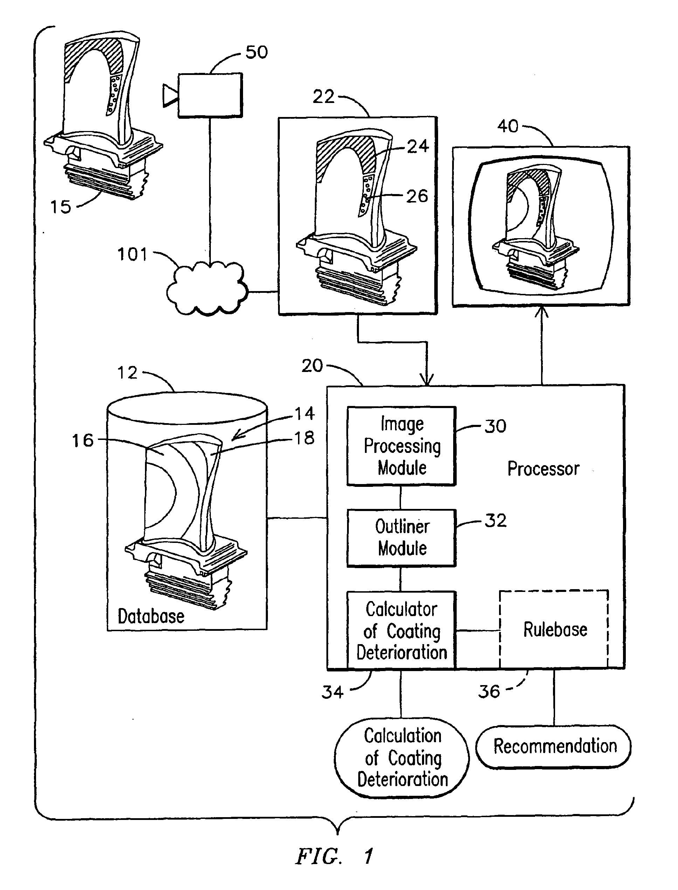

FIG. 1 is a block diagram representation of an exemplary system embodying aspects of the present invention for processing inspection data for evaluating degradation of a coating. By way of example, the coating may be used as a thermal barrier in a component 15, such as utilized in power-generating turbines, propulsion equipment, aerospace equipment, etc. A database 12 may comprise a representation 14 of the type of component undergoing inspection. In one exemplary embodiment, this representation may be a graphical representation 14 mapped to include identifiable inspection zones that may be based or defined on any of various criteria, such as the physical configuration of the component, and/or the profile of one or more environmental and/or operational parameters impinging on the respective zones of the component, e.g., temperature profile, mechanical stress profile, vibration profile. For example, a zone 16 may be indicative of a temperature profile comprising moderate temperatures relative to a zone 18. That is, zone 16 would define an area where the operational temperature of the component is moderate relative to the operational temperatures likely to be encountered over zone 18. It will be appreciated that the representation of the object need not be a graphical representation since other non-graphical representations, such as a functional or mathematical representation of the component may be used.

The inventors of the present invention have innovatively recognized that selectively subdividing the component into multiple zones for inspection purposes, allows acquiring insightful information regarding the criticality of any observed coating deterioration, e.g., deterioration in a thermal barrier coating (TBC). For example, a moderate amount of TBC deterioration may be tolerable for a longer period of time in a low-temperature zone whereas even a small amount of TBC deterioration may need immediate corrective action in a high temperature zone.

A processor 20 may be configured to process inspection data 22 of an actual physical component either undergoing inspection or having undergone inspection. For example, inspection data 22 could include an area 24 of complete TBC loss. Inspection data 22 could further include an area 26 of partial (e.g., patch) TBC loss. An image-processing module 30 may be configured to process inspection data 22 relative to the mapped graphical representation of the component. In one exemplary embodiment, image-processing module 30 may allow to superimpose the mapped zones of graphical representation 14 onto the inspection data of the component undergoing inspection.

An outliner module 32 may be provided to define areas having a quantifiable degree of deterioration within one or more of the zones. The outliner module may be responsive to inputs provided by a user via a computer interface device, such as a computer mouse, computer pen, keyboard, etc. For example, area 24 may be respectively defined as an area of complete TBC loss while area 26 may be defined as an area of partial TBC loss.

In one exemplary embodiment, the operator based on his experience and/or training may directly determine the degree of deterioration to assign to the defined area. It is envisioned, however, that in some embodiments, the outliner module may be configured to include intelligence to automatically make a determination of the quantifiable degree of deterioration within one or more of the zones of the component undergoing inspection. For example, such a determination may be based on the degree of contrast between areas having a distinct degree of TBC loss since such areas are likely to have distinct reflective properties.

A calculator 34 may be configured to calculate the magnitude (e.g., quantified in percentage terms) of coating deterioration in any of the zones of the component. This may allow the user to quickly assess a possible course of action depending on the magnitude of the coating deterioration in any given zone. For example, the user may consult a servicing manual that may list possible courses of action based on the amount of coating deterioration over the given zone.

The output from calculator 34 may be optionally processed relative to a plurality of recommendation rules stored in a rulebase 36 for determining an appropriate course of action. For example, if the TBC loss is low in an area subject to relatively low temperature, then the recommendation of the database may be not to perform an immediate repair but to wait a predefined period of time. However, the same TBC loss in an area subject to relatively high temperature may cause rulebase 36 to issue an immediate repair action. It will be appreciated that the recommendations rules may be based on a computerized learning network, either internal or external relative to rulebase 36, such as a neural network.

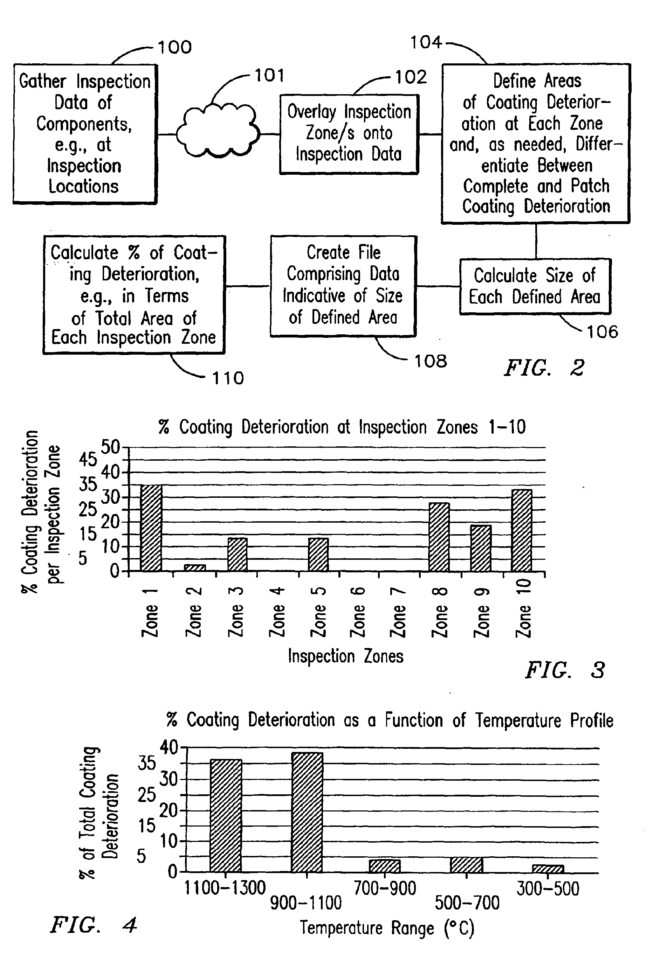

FIG. 2 illustrates a process flow of an exemplary method embodying aspects of the present invention. Block 100 allows gathering inspection data of components, such as turbine blades at any of a plurality of inspection locations. In one exemplary embodiment it is contemplated that an inspection apparatus 50 (FIG. 1) may comprise a photographic image station. In this embodiment, the inspection apparatus may comprise an enclosure including camera equipment for use under essentially identical lighting conditions to avoid the introduction of contrast variation due to varying lighting conditions. It will be appreciated that the inventive concepts of the present invention are not limited to acquisition of images with optical camera equipment since other modalities may be used for gathering inspection data of the test specimen, such as X-ray, ultrasound, infrared, or any other modality that would allow to make an inspection of the object wherein coating flaws may be observed.

A suitable communications network 101, such as the Internet, Intranet, Local Area Network, etc., may be used to transmit the inspection data from any of a plurality of remote locations to a central inspection data processing station. Block 102 allows overlaying one or more inspection zones as may be defined in a graphical representation of the component onto the inspection data by the use of image processing software as may be stored in image processing module 30 (FIG. 1). Block 104 allows outlining areas subject to varying degrees of TBC loss at each zone. For example, one may distinguish between complete and partial TBC loss. Block 106 allows calculating the size of the area at each zone outlined by the user. Block 108 allows creating a file, such as an Excel spreadsheet file, including data indicative of the size of the area outlined by the user. Block 110 allows calculating (e.g., in terms of percentage) the magnitude of TBC loss relative to the total area of each inspection zone. For example, if the area of total TBC loss outlined by the user comprises fifty percent of the total area for a given zone and if the area of partial TBC loss outlined by the user comprises twenty-five percent for that zone, then the amount of total TBC loss for that zone would be fifty percent and the amount of partial TBC loss would be twenty-five percent.

FIG. 3 illustrates an exemplary plot indicative of coating deterioration for each of ten inspection zones defined for a given test specimen. FIG. 4 illustrates another exemplary plot indicative of coating deterioration for a plurality of zones having a distinct temperature profile.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the spirit and scope of the appended claims.

## Claims

1. A system for processing inspection data for evaluating a coating on a component, the system comprising:
a database comprising a representation of a component, the representation comprising a mapping of the component based on a selected criteria; and
a processor configured to process inspection data of the component relative to the representation of the component.

2. The system of claim 1 wherein the processor comprises an image processing module configured to process an inspection data image relative to a mapped zone of the component.

3. The system of claim 1 wherein the selected criteria for mapping the component is based on a criticality of a mapped zone for continuing operation of the component.

4. The system of claim 1 wherein the selected criteria for mapping the component is based on a level of exposure to at least one operational and/or environmental parameter.

5. The system of claim 1 further comprising an outliner module for defining an area of the component having associated therewith a specified degree of degradation of the coating.

6. The system of claim 5 further comprising a calculator for calculating an amount of coating degradation in the defined area relative to at least one corresponding inspection zone.

7. The system of claim 1 further comprising a rulebase storing a plurality of rules processable for issuing servicing recommendations based on the amount of coating degradation.

8. The system of claim 1 further comprising a display for displaying both the mapped representation of the component and the processed inspection data overlapped on a single image of the component.

9. The system of claim 1 further comprising an inspection apparatus at any of a plurality of locations, said inspection apparatus in communication with the database through a communications network.

10. A method for processing inspection data for evaluating a coating used on a component, the method comprising:
populating a database with a representation of a component;
mapping the representation of the component based on a selected criteria; and
processing inspection data of the component relative to the representation of the component, thereby enabling a user to make a servicing decision in connection with the component undergoing inspection.

11. The method of claim 10 further comprising processing an inspection data image of the component relative to a mapped zone of the component.

12. The method of claim 10 wherein the selected criteria for mapping the component is based on a criticality of a mapped zone for continuing operation of the component.

13. The method of claim 10 wherein the selected criteria for mapping the component is based on a level of exposure to at least one operational and/or environmental parameter.

14. The method of claim 10 further comprising defining an area of the component having associated therewith a specified degree of degradation of the coating.

15. The method of claim 14 further comprising calculating an amount of coating degradation in the defined area relative to at least one corresponding inspection zone.

16. The method of claim 10 further comprising processing a plurality of rules stored in a rulebase for issuing servicing recommendations based on the amount of coating degradation.

17. The method of claim 10 further comprising displaying both the mapped representation of the component and the processed inspection data overlapped on a single image of the component.

18. A method of processing inspection data for a thermal barrier coating deposited on a gas turbine component, the method comprising:
dividing a representation of a gas turbine component into regions responsive to a performance criteria associated with the component;
inspecting the component to obtain inspection data responsive to a condition of a thermal barrier coating deposited on the component;
grouping the inspection data into groups corresponding to the respective regions of the component from which the data was obtained; and
processing the groups of inspection data separately to assess a condition of the thermal barrier coating.

19. The method of claim 18, further comprising processing the groups of inspection data by calculating an area percentage of the coating that is degraded in each respective region.

20. The method of claim 19, further comprising applying a rule base to the respective calculated area percentages to identify a repair action.
